# EUROPEAN PATENT APPLICATION

(11) **EP 1 503 507 A1**
(43) Date of publication of application: **02.02.2005**
(21) Application number: 04018111.7
(22) Date of filing: 30.07.2004
(51) Int. Cl.: H04B 1/20

(54) **Audio/video switching apparatus, audio/video switching control method and audio/video switching control program**

(30) Priority: 31.07.2003 JP 2003204541
(71) Applicant: Pioneer Corporation, Tokyo-to (JP)
(72) Inventor: Yanoguchi, Koji, 2610 Hanazono 4-chome Saitama-ken (JP); Nakamura, Masahiko, 2610 Hanazono 4-chome Saitama-ken (JP)
(74) Representative: Reinhard - Skuhra - Weise & Partner GbR

(57) **Abstract**

In an AV system which has a display capable of receiving a selection control information via a communications network; an amplifier capable of accessing to the display via the communications network; and a DVD player, a videotape recorder, and a set-top box which each are connected to the amplifier and the display,
there are provided:
a selection section for selecting one sound information from a plurality of sound information outputted separately from the DVD player, the videotape recorder and the set-top box to the amplifier; and
a communications section for transmitting to the display a selection control information which makes the display a selection of the video information to be outputted concurrently with the selected sound information, based on an connection information which indicates that the video information is to be outputted with the selected sound.

## Description

### BACKGROUND OF THE INVENTION

### Field of the Invention

The present invention relates to an information output system, an information output control method, and an information output control program. To be more specific, the present invention relates to an information output system for controlling an output mode for outputting information of different attributes at the same time, an information output control method, and an information control program used for the output control of the information.

### Description of the Related Art

In recent years, methods are available for outputting a sound signal and a video signal, which are outputted from a plurality of audio visual (hereinafter, simply referred to as "AV") devices (e.g., a DVD (Digital Versatile Disc) player, a set-top box, and so on), respectively to an amplifier for reproducing the sound signal and a display for outputting an image, permitting the enjoyment of a sound and an image corresponding to each other. In this case, the sound signal is outputted to the amplifier which is connected to a speaker and is optimized for reproducing the sound signal, and the video signal is outputted to the display, so that a sound and an image corresponding to each other can be enjoyed with higher performance in the most desirable manner.

In this case, the amplifier comprises a plurality of input terminals corresponding to sound signals outputted from a plurality of different AV devices. Similarly the display has to comprise a plurality of input terminals corresponding to video signals outputted from the plurality of different AV devices.

However, in the case of the plurality of AV devices connected to the plurality of input terminals provided in the amplifier and the plurality of input terminals provided in the display as described above, for example, when a sound and an image reproduced by a DVD player are enjoyed, the input terminals connected to the DVD player have to be selected in the amplifier and the display, respectively.

That is, when the input terminal connected to the DVD player is selected in the amplifier, a sound reproduced by the DVD player is released from the speaker, which is provided on the amplifier, based on a sound signal. In order to cause the display to have an image corresponding to the sound reproduced by the DVD player, it is necessary to select the input terminal connected from the display to the DVD player, besides the input terminal from the amplifier. Operations in two or more steps are necessary to enjoy a sound and an image reproduced by the DVD player.

Some displays comprise speakers. In order to avoid the operations in two or more steps, a sound corresponding to an image to be displayed on the display may be released by the speakers provided in the display. However, many of the speakers provided in the displays conventionally have insufficient performance when they are evaluated as simplex speakers. As a result, desired high-quality sound cannot be obtained.

### SUMMARY OF THE INVENTION

The present invention is devised in view of the problems. An object of the present invention is to provide an information output system, an information output control method, and an information output control program used for controlling the information output whereby a high-quality image or sound can be outputted even with a simple configuration and operation.

In order to solve the problems, an information output system according to the first aspect of the present invention comprises a first attribute information output device which is mainly used for outputting the first-attribute information, wherein the first-attribute information has any one of different kinds of attributes, and which device has a plurality of first-attribute input instruments to which information for outputting the first-attribute information are inputted individually, and a second-attribute information output device which is mainly used for outputting the second-attribute information having a different attribute from the first-attribute information, and which device has a plurality of second-attribute input instruments to which information for outputting the second-attribute information are inputted individually,
wherein the information output system is characterized by comprising a selecting device such as a selection section for selecting, as a selection information, one of the first-attribute information or one of the second-attribute information to be outputted; and an input selecting device, such as a control section, for selecting one of the first-attribute input instruments or one of the second-attribute input instruments, to which the information for outputting one of the first-attribute information or one of the second-attribute information to be outputted concurrently with the selected selection information is inputted, based on an identification information for identifying the first-attribute information and the second-attribute information to be outputted concurrently from the attribute information output device and the a second-attribute information output device respectively.

In the second aspect of the present invention, the information output system further comprises a control device which performs control in such a manner as to output an associated information associated with one of the first-attribute information output device and the second-attribute information output device for outputting the selection information, wherein the associated information accompanies one of the first-attribute information or one of the second-attribute information outputted concurrently with the selected selection information.

In the third aspect of the present invention, there is provided the information output system wherein the selecting device and the input selecting device are provided in one of the first-attribute information output device and the second-attribute information output device,
the first-attribute information output device and the second-attribute information output device are connected so as to transmit and receive an input selection control information to and from each other, and
the input selecting device outputs the input selection control information which indicates one of the first-attribute input instruments or one of second-attribute input instruments as the selected input instrument, from one of the first-attribute information output device and the second-attribute information output device where the input selecting device is provided, to the opposite information output device, and selects the selected first-attribute or second-attribute input instrument which is provided in the opposite information output device.

In the fourth aspect of the present invention, the information output system further comprises a plurality of information generating devices which each generate and output the first-attribute information and the second-attribute information individually,
each first-attribute information input instrument and each information generating devices make one-to-one connection so as to transmit and receive the first-attribute information to and from each other, and
each second-attribute information input instrument and each information generating device make one-to-one connection so as to transmit and receive the second-attribute information to and from each other.

In the fifth aspect of the present invention, there is provided the information output system wherein the first-attribute information is video information, the first-attribute information output device is a video display device, the second-attribute information is sound information which has contents corresponding to the video information, and the second-attribute information output device is an amplifier for amplifying a sound.

In order to solve the problems, an first-attribute information output device according to the sixth aspect of the present invention, which is included in the aforementioned information output system, comprises the first-attribute information input instruments, the selecting device, and the input selecting device.

In order to solve the problems, a second-attribute information output device according to the seventh aspect of the present invention, which is included in the aforementioned information output system, comprises the second-attribute information input instruments, the selecting device, and the input selecting device.

In order to solve the problems, an information output control method according to the eighth aspect of the present invention, which is performed in an information output system which comprises a first-attribute information output device mainly used for outputting the first-attribute information, wherein the first-attribute information has any one of different kinds of attributes, and a second-attribute information output device mainly used for outputting the second-attribute information, wherein the second-attribute information has an attribute other than the first-attribute, the first-attribute information output device comprising a plurality of first-attribute input instruments to which information for outputting the first-attribution information are inputted individually, the second-attribute information output device comprising a plurality of second-attribute input instruments to which information for outputting the other attribution information are inputted individually,
is characterized by comprising:
a selecting step of selecting, as selection information, one of the first-attribute information to be outputted or a second-attribute information to be outputted, and
an input selecting step of selecting one of the first-attribute input instruments or one of the second-attribute input instruments, to which the information for outputting one of the first-attribute information or one of the second-attribute information to be outputted concurrently with the selected selection information is inputted, based on identification information for identifying the first-attribute information and the second-attribute information to be outputted simultaneously from the first-attribute information output device and the second-attribute information output device.

In order to solve the problems, an information output control program for a computer according to the ninth aspect of the present invention, the computer being included in an information output system comprising a first-attribute information output device which is mainly used for outputting the first-attribute information, wherein the first-attribute information has any one of different kinds of attributes, and which device has a plurality of first-attribute input instruments to which information for outputting the first-attribute information are inputted individually, and a second-attribute information output device which is mainly used for outputting the second-attribute information, wherein the second-attribute information has an attribute other than the first-attribute, and which device has a plurality of second-attribute input instruments to which information for outputting the second-attribute information are inputted individually,
is characterized by comprising:
a function causing the computer to act as
a selecting device for selecting, as a selection information, one of the first-attribute information to be outputted or one of the second-attribute information to be outputted, and to act as
an input selecting device for selecting one of the first-attribute input instruments or one of the second-attribute input instruments, to which the information for outputting one of the first-attribute information or one of the second-attribute information to be outputted concurrently with the selected selection information is inputted, based on an identification information for identifying the first-attribute information and the second-attribute information to be outputted simultaneously from the first-attribute information output device and the second-attribute information output device.

### BRIEF DESCRIPTION OF THE DRAWINGS

FIG. 1 is a block diagram showing the schematic configuration of an AV system T according to an embodiment of the present invention;
FIG. 2 is a diagram showing an example of connection information;
FIG. 3 is a flowchart (I) showing selection controlling operation; and
FIG. 4 is a flowchart (II) showing selection controlling operation.

### DETAILED DESCRIPTION OF THE PREFERRED EMBODIMENTS

A preferred embodiment of the present invention will be described below in accordance with the accompanying drawings.

The following embodiment is an embodiment where the present invention is applied to an AV system which includes a plurality of AV devices such as a DVD player capable of outputting video information and sound information, and which outputs the video information from these AV devices to a display, and outputs the sound information of the AV devices from a speaker(s) via an amplifier.

### (I) Embodiment 1

### (A) Embodiment of the overall configuration and function of an AV system

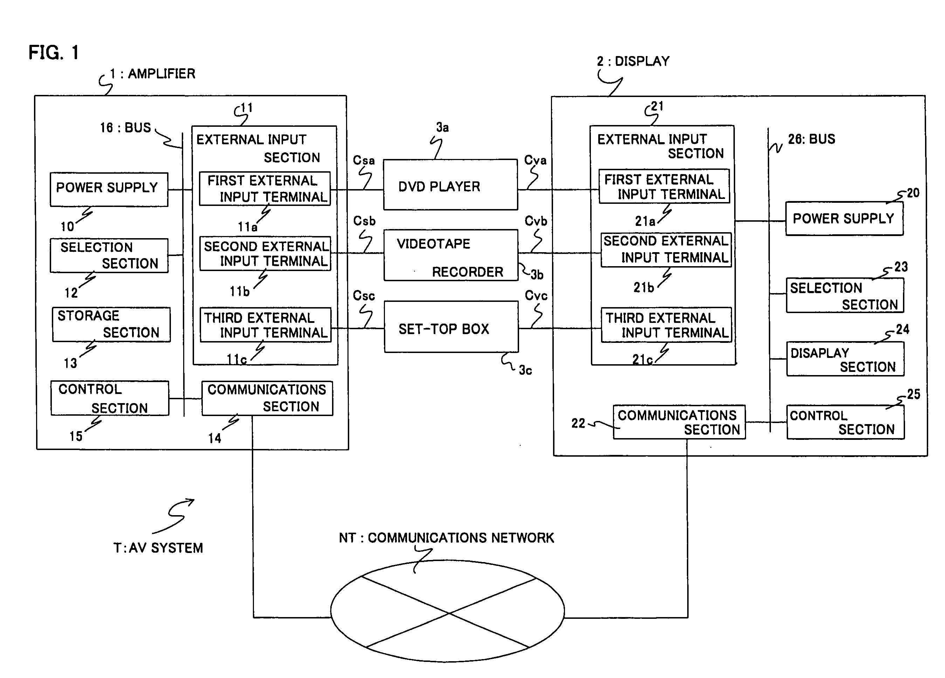

Referring to FIG. 1, the configuration and function of the AV system will be first described below according to the present embodiment. FIG. 1 is a block diagram showing the schematic configuration of the AV system.

As shown in FIG. 1, an AV system T of this embodiment comprises an amplifier 1, a display 2, a DVD player 3a, a videotape recorder 3b, a set-top box 3c, and a communications network NT.

The amplifier 1 and the display 2 are connected to each other via the communications network NT such as a LAN. The amplifier 1 is connected to the DVD player 3a, the videotape recorder 3b, and the set-top box 3c via codes Csa, Csb, and Csc, respectively.

The code Csa is connected to a first external input terminal 11a of an external input section 11, the code Csb is connected to a second external input terminal 11b of the external input section 11, and the code Csc is connected to a third external input terminal 11c of the external input section 11 in the amplifier 1.

Meanwhile, the display 2 is connected to the DVD player 3a, the videotape recorder 3b, and the set-top box 3c via codes Cva, Cvb, and Cvc, respectively.

The code Cva is connected to a first external input terminal 21a of an external input section 21, the code Cvb is connected to a second external input terminal 21b of the external input section 21, and the code Cvc is connected to a third external input terminal 21c of the external input section 21 in the display 2.

In the aforementioned configuration, sound information reproduced in the DVD player 3a (hereinafter the sound information will be referred to as "sound information SA"), sound information reproduced in the videotape recorder 3b (hereinafter the sound information will be referred to as "sound information SB") , and sound information reproduced in the set-top box 3c (hereinafter the sound information will be referred to as "sound information SC") are inputted to the amplifier 1 via the code Csa, the code Csb, and the code Csc, respectively.

Meanwhile, video information reproduced in the DVD player 3a (hereinafter the video information will be referred to as "video information VA"), video information reproduced in the videotape recorder 3b (hereinafter the video information will be referred to as "video information VB"), and video information reproduced in the set-top box 3c (hereinafter the video information will be referred to as "video information VC") are inputted to the display 2 via the code Cva, the code Cvb, and the code Cvc, respectively.

### (B) Detailed configuration and function of the amplifier

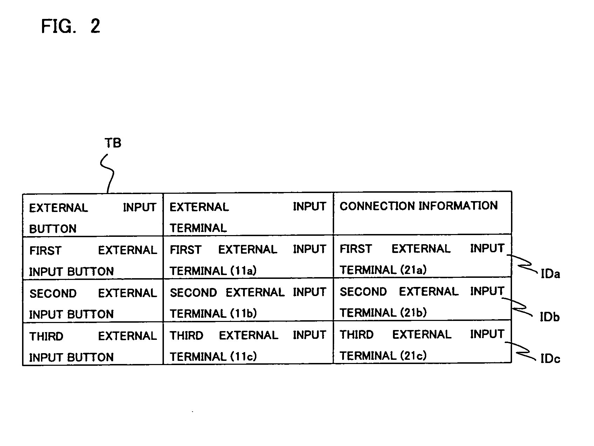

Referring to FIGS. 1 and 2, the detailed configuration and function of the amplifier 1 will be described below. FIG. 2 is a diagram showing an example of the contents of a connection table TB, which will be described later.

The amplifier 1 of FIG. 1 is configured as a so-called AV amplifier which adjusts the volume, tone, or balance of inputted sound information and outputs a desired sound signal to speaker(s) and so on (not shown) to produce a sound.

In this case, the amplifier 1 comprises a power supply 10, the external input section 11, a selection section 12 serving as a selecting device, a storage section 13, a communications section 14, and a control section 15 serving as an input selecting device for controlling the constituent elements. These constituents are connected via a bus 16 in such a manner as to transmit and receive information to and from one another.

In this case, the external input section 11 comprises the first external input terminal 11a, the second external input terminal 11b, and the third external input terminal 11c.

Further, the selection section 12 is used for selecting one sound information to be emitted from the sound information SA, SB, and SC which are inputted via the first external input terminal 11a, the second external input terminal 11b, and the third external input terminal 11c, respectively.

To be specific, the selection section 12 is configured as, e.g., a remote controller and so on and includes a first external input button (not shown) corresponding to the first external input terminal 11a, a second external input button (not shown) corresponding to the second external input terminal 11b, and a third external input button (not shown) corresponding to the third external input terminal 11c. Further, the selection section 12 emits, through the speakers (not shown), one sound information inputted via one of the external input terminals 11a to 11c that corresponds to the external input button operated by the user of the AV system T.

Subsequently, the storage section 13 stores a connection information indicating the correspondence between the first external input terminals 11a, 11b, and 11c, which respectively correspond to the external input buttons of the selection section 12, and the first external input terminals 21a to 21c provided in the external input section 21 of the display 2.

In the AV system T of this embodiment, fundamentally, the sound information SA and the video information VA that are both reproduced from the DVD player 3a, should be concurrently produced from the speakers and displayed on the display 2, because of the correspondence between them. Therefore, as shown in FIG. 2, the storage section 13 stores the connection table TB, wherein the connection table TB includes connection information IDa which indicates the external input terminal 21a of the display 2 as the external input terminal matched with the first external input terminal 11a corresponding to the first external input button.

Similarly, the sound information SB and the video information VB that are both reproduced from the videotape recorder 3b, should be concurrently produced from the speakers and displayed on the display 2, because of the correspondence between them. Therefore, the connection table TB stored in the storage section 13 includes connection information IDb which indicates the external input terminal 21b of the display 2 as the external input terminal matched with the second external input terminal 11b corresponding to the second external input button.

Further, the sound information SC and the video information VC that are both reproduced from the set-top box 3c, should be concurrently produced from the speakers and displayed on the display 2, because of the correspondence between them. Therefore, the connection table TB stored in the storage section 13 includes connection information IDc which indicates the external input terminal 21c of the display 2 as the external input terminal matched with the third external input terminal 11c corresponding to the third external input button.

Then, under the control of the control section 15, the communications section 14 transmits and receives control information, which is discussed below, to and from the display 2 via the communications network NT. That is, the control information is selection control information for controlling the display 2 so as to display selectively one video information among the video information inputted from the first to third external input terminals 21a to 21c of the display 2 that corresponds to one external input terminal which is selected from the first to third external input terminals 11a to 11c by the selection section 12.

The control section 15 comprises a CPU (Central Processing Unit, not shown), working RAM (Random Access Memory) , a ROM (Read Only Memory) for storing data and various control programs including a communications program, and an oscillator circuit, etc. In response to an operation signal from an operation section (not shown), the control section 15 generates control information for controlling the constituents to perform an operation corresponding to operation information included in the operation signal, outputs the control information to the corresponding constituents via the bus 16, and exercises control over the operations of the constituents.

Concurrently, the control section 15 generates the aforementioned selection control information and outputs the information to the display 2 via the communications section 14 and the communications network NT.

The operations for the selection control information will be specifically described below. When the first external input button is selected by the selection section 12, the sound information SA is selected which is reproduced in the DVD player 3a connected to the first external input terminal 11a and a sound corresponding to the sound information SA is produced from the speakers (not shown). Concurrently, the control section 15 extracts the connection information IDa which is included in the connection table TB and indicates the first external input terminal 21a of the display 2. The corresponding selection control information (selection control information indicating the first external input terminal 21a) is generated and is transmitted to the display 2 via the communications section 14 and the communications network NT.

The display 2 for receiving the selection control information displays an image based on the video information VA outputted from the DVD player 3a connected to the first external input terminal 21a. A sound is released based on the sound information SA from the DVD player 3a and the image is displayed based on the video information VA in a synchronous manner.

Similarly, when selection section 12 selects the second external input button (or the third external input button) , the sound information SB is selected which is (or the sound information SC) reproduced (or outputted) in the videotape recorder 3b (or the set-top box 3c) connected to the second external input terminal 11b (or the third external input terminal 11c) and a sound corresponding to the sound information SB (or the sound information SC) is released from the speaker (not shown). Concurrently, the control section 15 extracts the connection information IDb (or the connection information IDc) which is included in the connection table TB and indicates the second external input terminal 21b (or the third external input section 21c) of the display 2. The corresponding selection control information (selection control information indicating the second external input terminal 21b (or selection control information indicating the third external input terminal 21c) ) is generated and is transmitted to the display 2 via the communications section 14 and the communications network NT.

The display 2 for receiving the selection control information displays an image based on the video information VB (or the video information VC) outputted from the videotape recorder 3b (or the set-top box 3c) connected to the second external input terminal 21b. A sound is released based on the sound information SB (or the sound information SC) from the videotape recorder 3b (or the set-top box 3c) and the image is displayed based on the video information VB (or the video information VC) in a synchronous manner.

### (C) The detailed configuration and function of the display

The detailed configuration and function of the display 2 will be described below.

To be specific, the display 2 of FIG. 1 may be a plasma display, a CRT (Cathode Ray Tube), a liquid crystal display, and so on. The display 2 shows a moving image or a static image which corresponds to inputted video information V.

The display 2 may comprise a power supply 20, the external input section 21, a communications section 22, a selection section 23, a display section 24, and a control section 25 for controlling the constituent elements. These constituents are connected via a bus 26 in such a manner as to transmit and receive information to and from one another.

In this case, the external input section 21 comprises the external input terminal 21a, the external input terminal 21b, and the external input terminal 21c.

The communications section 22 receives the selection control information from the amplifier 1 via the communications network NT.

The selection section 23 selects one of the first to third external input terminals 21a to 21c based on the selection control information received from the communications section 22, and causes the display section 24 to show an image corresponding to the video information VA, VB, or VC that is inputted via the selected external input terminal.

The display section 24 may be configured as the plasma display, a CRT display, or a liquid crystal display. The display section 24 shows a corresponding image based on video information inputted from the external input terminal selected by the selection section 23.

The control section 25 comprises a CPU (not shown), working RAM, a ROM for storing data and various control programs including a communications program, and an oscillator circuit, etc. In response to an operation signal from the operation section (not shown) , the control section 25 generates control information for controlling the constituent elements to perform an operation corresponding to operation information included in the operation signal, outputs the control information to the corresponding constituent via the bus 26, and exercises control over the operations of the constituents.

Concurrently, the control section 25 controls the selection section 23 so that the external input terminal indicated by the selection control information is selected and the corresponding video information is acquired based on the selection control information having been received by the communications section 22.

### (D) Embodiment of selection controlling operation

Referring to FIGS. 1 to 4, the selection controlling operation of the external input terminals according to the present invention will be specifically described below.

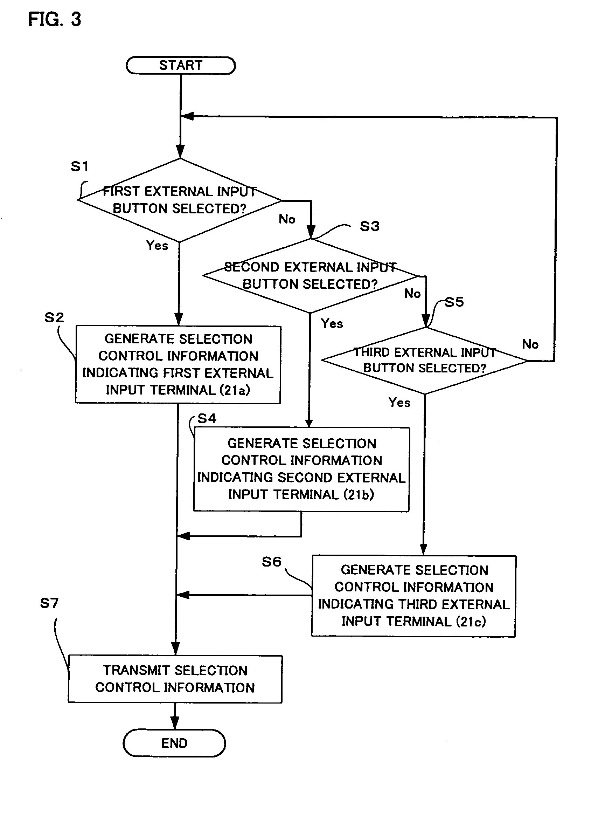

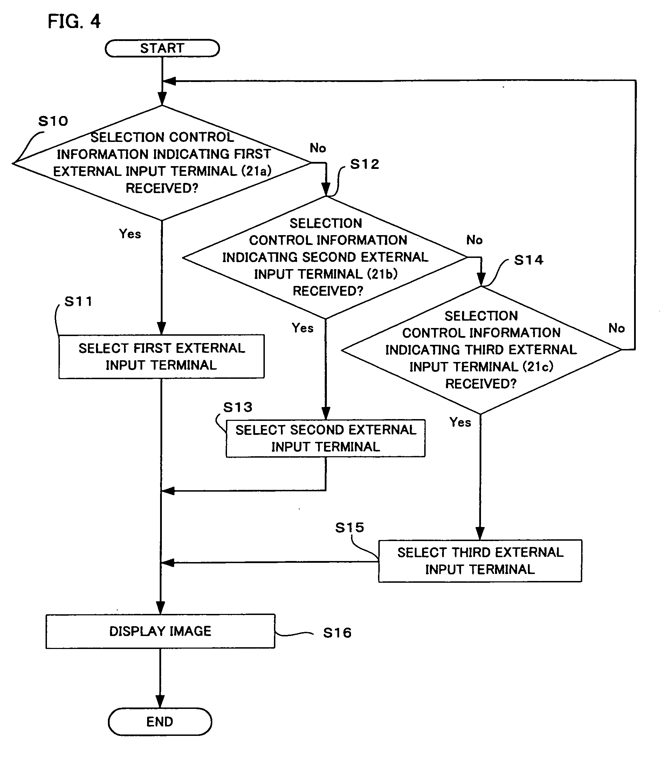

FIGS. 3 and 4 show a controlling operation performed in the AV system T of FIG. 1. To be specific, FIG. 3 is a flowchart showing selection controlling operation performed in the control section 15 of the amplifier 1. FIG. 4 is a flowchart showing selection controlling operation performed in the control section 25 of the display 2.

Referring to FIG. 3, the following will first describe an operation for transmitting the selection control information from the amplifier 1 to the display 2. The operation of FIG. 3 is performed by the control section 15 based on a selection control program which is stored beforehand in the ROM (not shown) of the control section 15.

As shown in FIG. 3, it is first decided whether or not the selection section 12 selects the first external input button (step S1). When it is decided that the first external input button is selected (step S1: Yes) , a selection control information is generated, which indicates that the first external input terminal 21a of the display 2 should be selected, based on the connection information IDa of the connection table TB stored in the storage section 13 (step S2) and the selection control information is transmitted to the communications section 22 of the display 2 via the communications section 14 and the communications network NT (step S7), so that a series of selection controlling operations in the amplifier 1 is completed.

When it is decided in step S1 that the first external input button is not.selected (step S2: No), it is decided whether or not the selection section 12 selects the second external input button (step S3). When it is decided that the second external input button is selected (step S3: Yes) , a selection control information is generated, which indicates that the second external input terminal 21b of the display 2 should be selected, based on the connection information IDb (step S4) and the selection control information is transmitted to the communications section 22 of the display 2 via the communications section 14 and the communications network NT (step S7), so that a series of selection controlling operations in the amplifier 1 is completed.

When it is decided in step S3 that the second external input button is not selected (step S3: No), it is decided whether or not the selection section 12 selects the third external input button (step S5). When it is decided that the third external input button is selected (step S5: Yes), a selection control information is generated, which indicates that the third external input terminal 21c of the display 2 should be selected, based on the connection information IDc (step S6) and the selection control information is transmitted to the communications section 22 of the display 2 via the communications section 14 and the communications network NT (step S7), so that a series of selection controlling operations in the amplifier 1 are completed.

By above operations, once one of the sound information SA, SB, and SC is selected by the amplifier 1, the selection control information for selecting the corresponding video information VA, VB, or VC is transmitted to the display 2.

Referring to FIG. 4, the following will describe the selection controlling operation performed by the display 2 for receiving the selection control information from the amplifier 1. The operation of FIG. 4 is performed by the control section 25 based on the selection control program which is stored beforehand in the ROM (not shown) of the control section 25.

As shown in FIG. 4, to perform the selection controlling operation of the present embodiment in the display 2, the video information VA, VB, and VC are received from the DVD player 3a, the videotape recorder 3b, and the set-top box 3c, which are connected to the display 2, via the first external input terminal 21a, the second external input terminal 21b, and the third external input terminal 21c, respectively.

First, it is decided whether or not the communications section 22 receives, from the amplifier 1, the selection control information (steps S2 and S7 of FIG. 3) indicating that the first external input terminal 21a should be selected (step S10). When it is decided that the selection control information is received which indicates that the first external input terminal 21a should be selected (step S10: Yes), the first external input terminal 21a is selected in the selection section 23 (step S11) and the display section 24 displays an image corresponding to the video information VA inputted from the DVD player 3a to the selected first external input terminal 21a (step S16), so that the display 2 completes a series of selection controlling operations. In this case, the speakers (not shown) connected to the amplifier 1 produce a sound corresponding to the sound information SA inputted from the DVD player 3a to the first external input terminal 11a of the amplifier 1. It is preferable to start emitting the sound immediately after the selection of step S1 of FIG. 3 or before the transmission of the selection control information in step S7 of FIG. 3. Hence, it is possible to more positively synchronize the sound and image.

In step S10, when it is not decided that the selection control information is received which indicates that the first external input terminal 21a should be selected (step S10: No), it is decided whether or not the communications section 22 receives, from the amplifier 1, the selection control information (step S4 and S7 of FIG. 3) which indicates that the second external input terminal 21b should be selected (step S12). When it is decided that the selection control information is receives which indicates that the second external input terminal 21b should be selected (step S12: Yes) , the second external input terminal 21b is selected in the selection section 23 (step S13) and the display section 24 displays an image corresponding to the video information VB inputted from the videotape recorder 3b to the selected second external input terminal 21a (step S16), so that a series of selection controlling operations in the display 2 are completed.

In this case, the speakers (not shown) connected to the amplifier 1 produce a sound corresponding to the sound information SB inputted from the videotape recorder 3b to the second external input terminal 11b of the amplifier 1. In this case, it is preferable to start emitting the sound immediately after the selection in step S3 of FIG. 3 or before the transmission of the selection control information in step S7 of FIG. 3. Hence, it is possible to more positively synchronize the sound and an image.

In step S12, when it is not decided that the selection control information is received which indicates that the second external input terminal 21b should be selected (step S12: No), it is decided whether or not the communications section 22 receives, from the amplifier 1, the selection control information (steps S6 and S7 of FIG. 3) which indicates that the third external input terminal 21c should be selected (step S14) . When it is decided that the selection control information is received which indicates that the third external input terminal 21c should be selected (step S14: Yes) , the third external input terminal 21c is selected in the selection section 23 (step S15) and the display section 24 displays an image corresponding to the video information VC inputted from the set-top box 3c to the selected third external input terminal 21c (step S16) , so that a series of selection controlling operations in the display 2 are completed. In this case, the speakers (not shown) connected to the amplifier 1 produce a sound corresponding to the sound information SC inputted from the set-top box 3c to the third external input terminal 11c of the amplifier 1. In this case, it is preferable to start releasing the sound immediately after the selection in step S5 of FIG. 3 or before the transmission of the selection control information in step S7 of FIG. 3. Hence, it is possible to more positively synchronize the sound and an image.

As described above, according to the selection controlling operation of the AV system T of the present embodiment, when one sound information to be come out of the amplifier 1 is selected from the sound information SA, SB, or SC, the amplifier 1 transmits, to the display 2, the selection control information for performing control to display an image based on the video information VA, VB, or VC of the same output source (the DVD player 3a, the videotape recorder 3b, or the set-top box 3c) as the selected sound information, in synchronization with the selection contents. Thus, a corresponding image can be instantly displayed on the display section 24 of the display 2.

Therefore, once the amplifier 1 selects the output source of a sound to be released, an image on the display 2 is instantly switched to an image corresponding to the output source and thus the user can always enjoy a desired sound and image in combination without operating the external input buttons and so on of the display 2.

Since an image is displayed on the display 2 and a corresponding sound is outputted from the speakers connected to the amplifier 1, it is possible to obtain a high-quality image and a high-quality sound while minimizing the load of operations for the user.

In the above mentioned embodiment, the sound information SA, SB, or SC is selected and the selection control information is generated based on the connection information IDa to IDc in the connection table TB. Thus, the user can freely change and set the correspondence by using a keyboard, a remote controller, and an input section such as a key of the amplifier 1 (not shown).

To be more specific, for example, when it is desired that the sound information SC from the set-top box 3c and the video information VA from the DVD player 3a are outputted at the same time, it is possible to be attained by storing as the connection information IDc of the storage section 13 an information indicating the first external input terminal 21a. Further, when it is desired that an image based on the video information VA from the DVD player 3a is consistently displayed on the display section 24, it is possible to be attained by storing the overall connection information as contents indicating the first external input terminal 21a.

Moreover, the following configuration is also available: sound quality settings such as the surround mode of the amplifier 1, initial settings, the volume, set distance and, the number of connected speakers, or setting processes such as an automatic sound field setting function are transmitted as associated information from the communications section 14 to the display 2 via the communications network NT, and the associated information of the amplifier 1 is displayed on the display section 24 of the display 2. This configuration makes it possible to confirm a state of the amplifier 1 on the display section 24 of the display 2. In this case, it is particularly preferable to create a telop on the lower part of the display section 24. With this configuration, it is possible to display a state of the amplifier 1 on the display 2 for confirmation without the need for a circuit such as an on-screen system.

Further, in the above mentioned embodiment, the storage section 13 is provided in the amplifier 1 and selection control information is transmitted from the amplifier 1 to the display 2. Alternatively, the display 2 may comprise a storage section for storing the same contents as the storage section 13 and the alternative storage section may store connection information indicating the first to third external input terminals 11a to 11c to be matched with the selected first to third external input terminals 21a to 21c. With this configuration, when one of the video information VA to VC to be displayed is selected in the display 2, selection control information for controlling the selection of one of the sound information SA to SC from the same output source is simultaneously transmitted from the communications section 22 to the communications section 14 via the communications network NT. Thus, a corresponding sound can be instantly released from the speaker connected to the amplifier 1.

Furthermore, the following configuration is also available: a program corresponding to the flowcharts of FIGS. 3 and 4 is recorded on an information recording medium such as a flexible disk and a hard disk or may be acquired and recorded via networks such as the Internet, and a general purpose computer such as a microcomputer is caused to read and execute the program, so that the computer can act as the control section 15 or 25 of the present embodiment.

The present invention has been described in detail by way of illustrations and embodiments for purposes of clarity and understanding. However, it will be obvious that the present invention is not limited to the embodiments described herein, and that certain changes and modifications may be practiced within the scope of the invention, as limited only by the scope of the appended claims.

## Claims

1. An information output system which comprises
a first-attribute information output device which is mainly used for outputting the first-attribute information, wherein the first-attribute information has any one of different kinds of attributes, and which device has a plurality of first-attribute input instruments to which information for outputting the first-attribute information are inputted individually, and
a second-attribute information output device which is mainly used for outputting the second-attribute information, wherein the second-attribute information has an attribute other than the first-attribute, and which device has a plurality of second-attribute input instruments to which information for outputting the second-attribute information are inputted individually,
wherein the system is **characterized by** comprising:
a selecting device for selecting, as a selection information, one of the first-attribute information to be outputted or one of the second-attribute information to be outputted, and
an input selecting device for selecting one of the first-attribute input instruments or one of the second-attribute input instruments, to which the information for outputting one of the first-attribute information or one of the second-attribute information to be outputted concurrently with the selected selection information is inputted, based on an identification information for identifying the first-attribute information and the second-attribute information to be outputted concurrently from the first-attribute information output device and the second-attribute information output device respectively.

2. The information output system according to claim 1, further comprising a control device which performs control in such a manner as to output an associated information associated with one of the first-attribute information output device and the second-attribute information output device for outputting the selection information, wherein the associated information accompanies one of the first-attribute information or one of the second-attribute information outputted concurrently with the selected selection information.

3. The information output system according to claim 1 or 2, wherein the selecting device and the input selecting device are provided in one of the first-attribute information output device and the second-attribute information output device,
the first-attribute information output device and the second-attribute information output device are connected so as to transmit and receive an input selection control information to and from each other, and
the input selecting device outputs the input selection control information which indicates one of the first-attribute input instruments or one of second-attribute input instruments as the selected input instrument, from one of the first-attribute information output device and the second-attribute information output device where the input selecting device is provided, to the opposite information output device, and selects the selected first-attribute or second-attribute input instrument which is provided in the opposite information output device.

4. The information output system according to any one of claims 1 to 3, wherein the system comprises a plurality of information generating devices which each generate and output the first-attribute information and the second-attribute information individually,
each first-attribute information input instrument and each information generating device make one-to-one connection so as to transmit and receive the first-attribute information to and from each other, and
each second-attribute information input instrument and each information generating device make one-to-one connection so as to transmit and receive the second-attribute information to and from each other.

5. The information output system according to any one of claims 1 to 4, wherein the first-attribute information is video information,
the first-attribute information output device is a video display device,
the second-attribute information is sound information which has contents corresponding to the video information, and
the second-attribute information output device is an amplifier for amplifying a sound.

6. The first-attribute information output device which is included in the information output system mentioned in any one of claims 1 to 5, which comprises:
the first-attribute information input instruments,
the selecting device, and
the input selecting device.

7. The second-attribute information output device which is included in the information output system mentioned in any one of claims 1 to 5, which comprises:
the second-attribute information input instruments,
the selecting device, and
the input selecting device.

8. An information output control method performed in an information output system which comprises a first-attribute information output device mainly used for outputting the first-attribute information, wherein the first-attribute information has any one of different kinds of attributes, and a second-attribute information output device mainly used for outputting the second-attribute information, wherein the second-attribute information has an attribute other than the first-attribute, the first-attribute information output device comprising a plurality of first-attribute input instruments to which information for outputting the first-attribution information are inputted individually, the second-attribute information output device comprising a plurality of second-attribute input instruments to which information for outputting the other attribution information are inputted individually,
wherein the method is **characterized by** comprising:
a selecting step of selecting, as selection information, one of the first-attribute information to be outputted or a second-attribute information to be outputted, and
an input selecting step of selecting one of the first-attribute input instruments or one of the second-attribute input instruments, to which the information for outputting one of the first-attribute information or one of the second-attribute information to be outputted concurrently with the selected selection information is inputted, based on identification information for identifying the first-attribute information and the second-attribute information to be outputted simultaneously from the first-attribute information output device and the second-attribute information output device.

9. An information output control program for a computer, the computer being included in an information output system comprising a first-attribute information output device which is mainly used for outputting the first-attribute information, wherein the first-attribute information has any one of different kinds of attributes, and which device has a plurality of first-attribute input instruments to which information for outputting the first-attribute information are inputted individually, and a second-attribute information output device which is mainly used for outputting the second-attribute information, wherein the second-attribute information has an attribute other than the first-attribute, and which device has a plurality of second-attribute input instruments to which information for outputting the second-attribute information are inputted individually,
wherein the program is **characterized by** comprising a function causing the computer to act as
a selecting device for selecting, as a selection information, one of the first-attribute information to be outputted or one of the second-attribute information to be outputted, and to act as
an input selecting device for selecting one of the first-attribute input instruments or one of the second-attribute input instruments, to which the information for outputting one of the first-attribute information or one of the second-attribute information to be outputted concurrently with the selected selection information is inputted, based on an identification information for identifying the first-attribute information and the second-attribute information to be outputted simultaneously from the first-attribute information output device and the second-attribute information output device.
